# EUROPEAN PATENT SPECIFICATION

(11) **EP 0 525 296 B1**
(45) Date of publication and mention of the grant of the patent: **02.09.1998**
(21) Application number: 92104963.1
(22) Date of filing: 23.03.1992
(51) Int. Cl.: A61C 8/00

(54) **Osteointegrated assembly consisting of a pin and an interchangeable collar the height of which is selected according to the thickness of the patient's mucous epithelial connective tissue layer**
Zahnimplantataufbau mit einem Implantatstift und einem auswechselbaren, in der Höhe der Gingivadicke anpassbaren Halteteil
Ensemble ostéo-intégrable constitué d'un pivot et d'un attachement interchangeable dont la hauteur est choisie en accord avec l'épaisseur de la muqueuse gingivale

(30) Priority: 01.08.1991 IT MI910709 U
(43) Date of publication of application: 03.02.1993
(73) Proprietor: Assenza, Bartolomeo, Segrate, Milano Due, Milano (IT)
(72) Inventor: Assenza, Bartolomeo, Segrate, Milano Due, Milano (IT)
(74) Representative: Klausner, Erich

(56) References cited:
- EP-A- 0 313 222
- EP-A- 0 323 421
- EP-A- 0 475 299

## Description

The instant invention relates to an osteointegrated assembly formed by a pin and by an interchangeable collar, the height of which can be selected according to the thickness of the patient's epithelial mucous tissue layer.

In the field of odontoiatric implantology techniques for the reconstruction of toothless areas, one of the known technologies consists of inserting into the jaw bones one or more pins to form a firm support for the prosthesis to be subsequently applied, said pins being often, but not necessarily, provided with an external threading in order to be fastened to the bone by screwing, said pins being provided,or not, with a lower cavity to allow for the regeneration of the bone also in the inner part of the implant.

Once the pins are located in the pre-selected position by plunging them right into the bony crest or just below, they are allowed to remain quiescent for some time to permit an adequate integration with the bony seat.

After a settling-in period, the dentist proceeds to secure the prosthesis provided with a base having a lower tang, said base having to be secured onto the head of the pin with a perfect adhesion so as to avoid infiltration of organic fluids and bacterial proliferation on the bone.

Drawbacks and imperfect adhesion occur with the presently available types of bases secured by screwing into the head of the osteointegrated pin, which bases can also become disarranged in due course because of partial unscrewing, considering also that the securing, by screwing, of the base onto the pin always makes a faulty alignment of the prosthesis with the contiguous teeth.

To remedy this drawback, even if only partially, the dentist must nowadays keep in stock, in addition to pins of various lengths, also a considerable variety of bases of different heights commensurate to the different thicknesses of the epithelial layers, which vary from patient to patient, as well as to the different alignments with respect to the contiguous teeth.

Osteointegrated dental implants are known in the art.

For istance, EP Patent 0 313 222 issued to Detsch, which is the closest piece of prior art, discloses a very complete but at the same time very complex dental implant attachment system for mounting a prosthesis on an artificial root implant. The system proposed in the Detsch patent includes:
- a first element, i.e. a root implant cylinder;
- a second element, i.e. a base member superimposable onto the root cylinder;
- a third element or prosthetic head having its lower end shaped for mounting on the upper end of the second element, i.e. on the base member, onto which prosthetic head is screw-fitted the prosthesis or false tooth.

These second and third elements are secured onto the root cylinder by means of a screw, the second element being besides provided with a lower polygonal seat suitable for receiving a corresponding polygonal projection formed on the upper part of the first element so as to avoid the reciprocal rotation of the two parts.

The third element may be of many different shapes in order to align the prosthesis with the patient's other teeth.

The components of this dental implant system, in particular the screws, apart from being expensive, also prove difficult to apply by the dentist who performs his work in a very awkward operating field using elements of extremely small dimensions.

Furthermore, in the course of time the screws which keep these three elements secured to each other can become loose, with the risk of an imperfect adherence particularly between the root cylinder and the base member, thereby causing the infiltration and proliferation of bacterial colonies.

The purpose of the instant invention is to simplify and to improve the connection between the osteointegrated implant, consisting of pins of various types, either threaded or cylindrical, hollow or not, and the prosthesis by means of a relatively economical, intermediate, easily applicable element, capable of attaining a perfect adhesion onto the osteointegrated pin head, said element being also apt to reduce the number of items to keep in stock and to act as an intermediate to facilitate the preparation and fixing of the definite prosthesis in one or more operative steps.

According to the instant invention an intermediate connecting element, or endomucous collar, is provided which forms a direct tight connection by forcing said element into a suitable seat provided on the head of the osteointegrated pin.

According to this invention, said collar, preferably frustum-shaped and provided with an axial through-hole, is prepared in a limited set of heights and flares useful for its adaptation, at the dentist's choice, to the actual thickness of the patient's connective epithelial tissue layer, thereby acchieving with a limited number of elements a large number of possible combinations between the length of the ostoeintegrated pin and the thickness of the connective tissue layer.

In this manner, in addition to simplifying the problem of keeping in stock a large quantity of elements of not simple construction, such as the presently available bases, is ensured a perfect adhesion to the pin head, thereby avoiding any possibility of infection or infiltration into the epithelial tissue, which might give rise to an inflammatory process.

The collars are preferably frustum-shaped converging towards the annular crown which will come into contact with the head of the osteointegrated pin, perfectly adhering thereto, and may be advantageously utilized in a single operative step or in two steps.

In the first case the dental surgeon inserts the pin into the jaw bone and immediately afterwards superimposes the collar of appropriate height, temporarily stopping its central through-hole until the pin is fully settled in the jaw bone and until a thin layer of the epithelial layer has healed above the collar itself.

In the second case the operating steps consist, in sequence, of the temporary stopping of the cavity of the pin, of the osteogenetic restoring of the pin and the healing of the epithelial connective tissue layer, then of a re-incision of the latter,of the forced insertion of the collar onto the pin and the completion of the securing of the prosthesis.

In both the above cases the endomucous collar, due to its special construction features, always ensures a perfect adhesion to the head of the pin and the absence of dangerous infiltrations at the bone level below the gums, whilst ensuring, subsequently, an accurate securing of the prosthesis which is prepared according to the usual mould method, the prosthesis being completed with relevant tang to be inserted and cemented into the through-hole of the collar and into the corresponding cavity of the osteointegrated pin. Cementing of the tangs of the prosthesis inserted into the cavity of the pin constitutes a further sound coupling means between the pin and the collar, thus making the assembly fixed, in addition to the foreseen forcing of the collar onto the head of the pin itself.

The invention will now be described in conjunction with the annexed drawings which serve for illustrative purposes but are not to be construed as a limitation of the inventive idea of the invention.
In the drawings :
Fig. 1 is a partial view in cross-section of the assembly according to the invention, consisting of a pin on the top part of which is applied the endomucous collar.
Figs. 2A and 2B are exploded views of the details of the collar illustrated in Fig. 1 and of the top part of a generic osteointegrated pin, intended to be forcibly joined to each other.
Figs. 3A and 3B illustrate, as Figs. 2A and 2B, a further form of forced coupling of the collar onto the osteointegrated pin, within the scope of the instant invention.

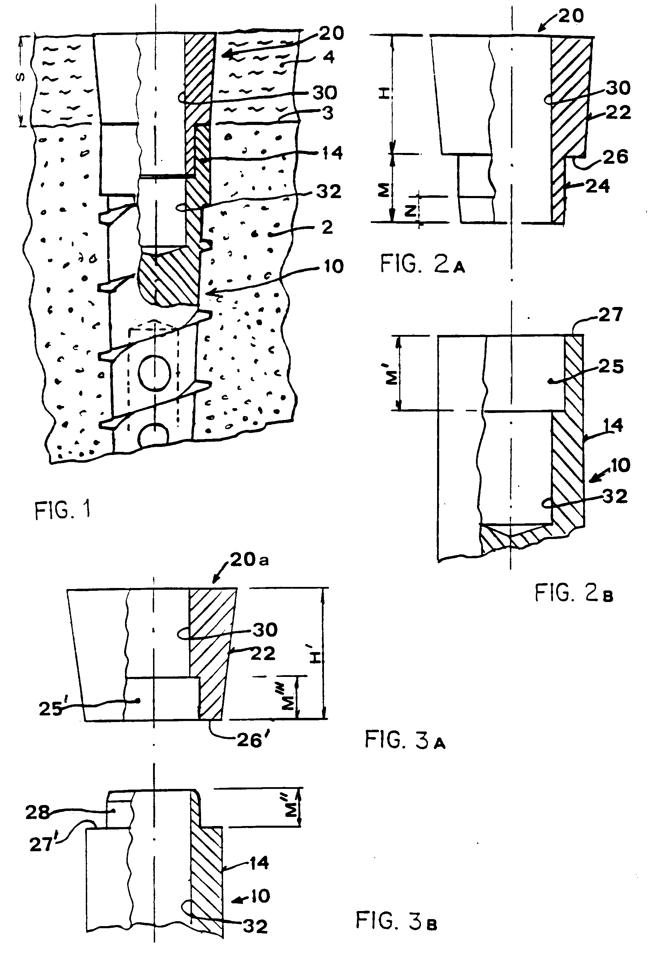

Fig. 1 shows, on an enlarged scale, an osteointegrated pin 10 which, by way of example, in this case is of the threaded body type according to a prior patent application of the Applicant (viz.Nos. 19794 A/89 and 20751 B.89 dated March 16,1989). Pin 10 is plunged into the jaw bone 2 substantially up to level 3, above which commences the connective tissue layer 4. The endomucous collar 20, according to the instant invention shown in particular in Fig. 2A, has a body 22, preferably frustum-shaped, the lower part of which converges toward the head 14 of an osteointegrated pin of any type, again shown generically by numeral 10 in Fig. 2B, and on which said collar is to be inserted. The cone angle of collar 20 may range from 5° to 40°.

The useful height H of the body 22 of the collar 20 varies within a set of preadjustable elements which can be appropriately chosen by the dentist so as to correspond to the thickness S of the patient's epithelial connective layer. By way of example, H may vary between 2 and 12mm while in the embodiment shown in the above referred figures, the body 22 is provided with a lower recessed part 24 for the forced insertion onto pin 10, the total height M of said part 24 ranging, e.g., between 1 and 8mm. The free end of part 24 for the forced insertion is preferably slightly tapered in a terminal end zone, the height N of which may range from 1/6 to 1/2 of M to favour the entry into the corresponding cylindrical seat 25 in the head 14 of the pin 10 intended to forcibly receive the part 24 of the collar 20, as stated above. Depth M' of the seat 25 will slightly exceed the height M of the lower part 24 of the collar so as to ensure a perfect mating between the surfaces of crowns 26 and 27 resp. of the base of the body 22 of the collar 20 and the head 14 of the osteointegrated pin.

As it can be seen in Figs 2A and 2B, the collar 20 has a central through-hole 30 the diameter of which is substantially, but not necessarily, equal to that of a blind hole 32 which is coaxial to the collar itself, in the top part of the pin 10. The tang of the prosthesis's base (not shown) to be fitted into the pin will be inserted into holes 30 and 32, arranged in sequence.

The internal surface of said holes 30 and 32 can be roughened, if necessary, to improve the adhesion of the prosthesis tangs cementing means, while it is foreseen that the smaller diameter of the body 22 of the collar 20 facing the pin 10 will be substantially equal to that of the pin itself.

Figs. 3A and 3B show a possible alternative, within the scope of the instant invention, for the forced coupling between the pin 10 and the endomucous collar 20a, having a useful height H' which can be varied at the dentist's choice within the above range of values. In this case the coupling of the two elements is inverted with respect to the previous one, since the head 14 of the pin 10 is provided with an upper recessed part 28, slightly tapered at its free end and apt to be forced into the cylindrical seat 25' provided, in this case, in the lower part of collar 20a. Also in this alternative embodiment the height M'' of the upper recessed part 28 will be slightly less than depth M''' of the seat 25', so as to ensure a perfect contact between the crowns 26' and 27'.

The collar 20 and 20a is preferably made of titanium.

## Claims

1. An osteointegrated assembly only consisting of:
- a first element (10) insertable into a jaw bone (2) of a patient in such a way that its upper end reaches substantially the level (3) where the epithelial connective tissue layer (4) commences;
- a second element (20, 20a), frustum-shaped, diverging away from said first element, said second element being provided with an axial through hole (30) and having a height (H, H') ranging from 2 to 12 mm;
- said first element (10) has, in its top portion, a blind axial hole (32) coaxial with the through-hole (30) of said second element (20, 20a); said first element (10) and said second element (20, 20a) being connectable in such a manner so as to be forcibly secured to each other; characterized in that a tang of a prosthesis thus being directly introduceable into the axially aligned holes (30, 32) and securable therein by cementing, thereby avoiding the use of an additional coupling element.

2. An osteointegrated assembly, according to claim 1, characterized in that the connection between the first (10) and the second element (20, 20a) is attained in that an end (24, 28) of one of the two elements is apt to be forcibly fitted into a seat (25, 25') of the other element.

3. An osteointegrated assembly according to claims 1 and 2, characterized in that the portion (22) of the second element (20, 20a) has in its lower part a circular flat crown ledge (26, 26') lying in a plane perpendicular to the axis of said second element, so as to attain a perfect mating between said ledge and the corresponding flat crown ledges (27, 27') of the first element (10), lying in a plane perpendicular to the axis of said first element.

4. An osteointegrated assembly according to claims 1 to 3, characterized in that both the surface of the through-hole (30) of the second element (20, 20a) as well as the surface of the blind hole (32) in the top part of the first element (10) is peripherally roughened in any manner so as to improve the adhesion of the cementing means which fixes the tang of the prosthesis inserted into said holes.

5. An osteointegrated assembly according to claims 2 to 4, characterized in that the lower portion (24) of the second element (20) is recessed and slightly tapered, whilst the coupling seat (25) in the head (14) of the first element (10) is cylindrical.

6. An osteointegrated assembly according to claims 2 to 4, characterized in that the upper portion (28) of the first element (10) is recessed and slightly tapered converging towards the second element (20a) in order to facilitate the entry into the seat (25') provided in the lower part of the second element (20a), said seat (25') being cylindrical.

## Patentansprüche

1. Zahnimplantataufbau, nur bestehend aus:
- einem ersten Element (10), das in der Weise in einen Kieferknochen (2) eines Patienten einsetzbar ist, daß sein oberes Ende im wesentlichen die Ebene (3) erreicht, in der die epitheliale Bindegewebsschicht (3) beginnt;
- ein zweites kegelstumpfförmiges Element (20, 20a), das von dem ersten Element weg divergiert, welches zweite Element mit einem axialen Durchgangsloch (30) versehen ist und eine Höhe (H, H') hat, die im Bereich von 2 bis 20 mm liegt;
- welches erste Element (10) in seinem oberen Abschnitt ein axiales Sackloch (32) hat, das mit dem Durchgangsloch (30) des zweiten Elements (20, 20a) koaxial ist; wobei das erste Element (10) und das zweite Element (20, 20a) in der Weise miteinander verbindbar sind, daß sie zwangsweise aneinander befestigt sind, dadurch gekennzeichnet, daß ein Kegelschaft einer Prothese auf diese Weise direkt in die axial fluchtend ausgerichteten Löcher (30, 32) einführbar ist und durch Zementieren darin befestigbar ist, so daß die Verwendung eines zusätzlichen Kupplungselements vermeidbar ist.

2. Zahnimplantataufbau nach Anspruch 1, dadurch gekennzeichnet, daß die Verbindung zwischen dem ersten (10) und dem zweiten Element (20, 20a) dadurch erhalten wird, daß ein Ende (24, 28) eines der beiden Elemente dafür ausgelegt ist, daß es zwangsweise in einen Sitz (25, 25') des anderen Elements eingepaßt werden kann.

3. Zahnimplantataufbau nach Anspruch 1 und 2, dadurch gekennzeichnet, daß der Abschnitt (22) des zweiten Elements (20, 20a) in seinem unteren Teil einen kreisförmigen flachen Auflageansatz (26, 26') hat, der in einer Ebene senkrecht zu der Achse des zweiten Elements liegt, um so eine perfekte Paßverbindung zwischen dem Ansatz und den entsprechenden flachen Auflageansätzen (27, 27') des ersten Elements (10) zu erreichen, die in einer Ebene senkrecht zu der Achse des ersten Elements liegen.

4. Zahnimplantataufbau nach Anspruch 1 bis 3, dadurch gekennzeichnet, daß sowohl die Oberfläche des Durchgangsloches (30) des zweiten Elements (20, 20a) als auch die Oberfläche des Sackloches (32) in dem Oberteil des ersten Elements (10) am Umfang in beliebiger Weise aufgerauht ist, so daß die Anhaftung der Zementiereinrichtung verbessert ist, die den in die Löcher eingeführten Kegelschaft der Prothese fixiert.

5. Zahnimplantataufbau nach Anspruch 1 bis 4, dadurch gekennzeichnet, daß der untere Abschnitt (24) des zweiten Elements (20) abgesetzt und geringfügig konisch ist, während der Kupplungssitz (25) in dem Kopf (14) des ersten Elements (10) zylindrisch ist.

6. Zahnimplantataufbau nach Anspruch 2 bis 4, dadurch gekennzeichnet, daß der obere Abschnitt (28) des ersten Elements (10) abgesetzt und geringfügig konisch zu dem zweiten Element (20a) konvergierend ist, um das Eintreten in den Sitz (25') zu erleichtern, der in dem unteren Teil des zweiten Elements (20a) vorgesehen ist, welcher Sitz (25') zylindrisch ist.

## Revendications

1. Ensemble ostéo-intégrable constitué de :
- un premier élément (10) pouvant être inséré dans un os de mâchoire (2) d'un patient de telle manière que son extrémité supérieure atteint sensiblement le niveau (3) où la couche (4) de tissu gingivale commence ;
- un second élément (20, 20a) de forme tronquée, divergent dudit premier élément, ce second élément présentant un trou traversant axial (30) et ayant une hauteur (H, H') comprise entre 2 et 12mm, et ledit premier élément (10) présente, à son sommet, un trou axial borgne (32) coaxial au trou traversant (30) dudit second élément (20, 20a), en ce que ledit premier élément (10) et ledit second élément (20, 20a) peuvent être reliés de façon à être solidarisés à force l'un à l'autre, caractérisé en ce qu'une queue de prothèse peut ainsi être directement introduite dans les trous axialement alignés (30, 32) et peut y être fixée par cémentation, évitant ainsi l'utilisation d'un élément d'accouplement additionnel.

2. Ensemble ostéo-intégrable selon la revendication 1, caractérisé en ce que la liaison entre ledit premier et le second éléments (20, 20a) est réalisée par le fait qu'une extrémité (24, 28) de l'un des deux éléments est apte à être ajustée à force dans un siège (25, 25 ') de l'autre élément.

3. Ensemble ostéo-intégrable selon les revendications 1 et 2, caractérisé en ce que la partie (22) du second élément (20, 20a) possède dans sa partie inférieure une moulure en couronne plate et circulaire (26, 26') s'étendant dans un plan perpendiculaire à l'axe dudit second élément, de manière à obtenir un partait accouplement entre ladite moulure et les moulures en couronnes plates (27, 27') dudit premier élément (10), se situant dans un plan perpendiculaire à l'axe dudit premier élément.

4. Ensemble ostéo-intégrable selon les revendications 1 à 3, caractérisé en ce que la surface du trou traversant (30) du second élément (20, 20a) aussi bien que la surtace du trou borgne (32) dans le sommet du premier élément (10) sont rugueuses à leur périphérie de façon à améliorer l'adhérence des moyens de cémentation qui fixent la queue de la prothèse insérée dans lesdits trous.

5. Ensemble ostéo-intégrable selon les revendications 2 à 4, caractérisé en ce que la partie inférieure (24) du second élément (20) est évidée et légèrement chanfreinée, tandis que le siège d'accouplement (25) dans la tête (14) dudit premier élément est cylindrique.

6. Ensemble ostéo-intégrable selon les revendications 2 à 4, caractérisé en ce que la partie supérieure (28) du premier élément (10) est évidée et légèrement chanfreinée en convergeant vers le second élément (20a), de façon à faciliter l'entrée dans le siège (25') prévue dans la partie inférieure du second élément (20a), ledit siège (25') étant cylindrique.
